(19) Europäisches Patentamt
European Patent Office
Office européen des brevets

(11) **EP 2 991 827 B1**

(12) **FASCICULE DE BREVET EUROPEEN**

(45) Date de publication et mention de la délivrance du brevet:
**14.06.2017 Bulletin 2017/24**

(21) Numéro de dépôt: **14727604.2**

(22) Date de dépôt: **30.04.2014**

(51) Int Cl.:
**B32B 17/10** *(2006.01)*     **C03C 17/36** *(2006.01)*

(86) Numéro de dépôt international:
**PCT/FR2014/051039**

(87) Numéro de publication internationale:
**WO 2014/177812 (06.11.2014 Gazette 2014/45)**

(54) **VITRAGE DE CONTROLE SOLAIRE COMPRENANT UNE COUCHE D'UN ALLIAGE DE ZINC ET DE CUIVRE**

SONNENSCHUTZVERGLASUNG MIT EINER SCHICHT AUS EINER ZINK- UND KUPFERLEGIERUNG

SOLAR CONTROL GLAZING COMPRISING A LAYER OF A ZINC AND COPPER ALLOY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2013 FR 1354094**

(43) Date de publication de la demande:
**09.03.2016 Bulletin 2016/10**

(73) Titulaire: **Saint-Gobain Glass France**
**92400 Courbevoie (FR)**

(72) Inventeur: **SINGH, Laura Jane**
**F-75011 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2006/039479      WO-A1-2013/057425**
**WO-A2-2007/134843      CN-A- 101 830 644**
**CN-A- 102 766 893      US-A1- 2008 112 096**
**US-A1- 2012 094 098**

**Description**

L'invention se rapporte au domaine des substrats ou articles verriers, en particulier du type vitrage de bâtiments, comprenant à leur surface des revêtements du type couches minces leur conférant des propriétés de contrôle solaire. Un tel vitrage peut également être appliqué dans le domaine de l'automobile. Par vitrage, on entend au sens de la présente invention tout produit verrier constitué par un ou plusieurs substrats verriers, en particulier les simples vitrages, les doubles vitrages, les triples vitrages etc. Sans sortir du cadre de l'invention, les vitrages peuvent également être en matière plastique dure. Alternativement, les empilements selon l'invention peuvent être déposés des films plastiques laminés par exemple du type PET, l'ensemble étant ensuite rapporté (collé) sur la surface d'un substrat verrier.

De tels vitrages sont munis d'empilements de couches minces qui agissent sur le rayonnement solaire incident par absorption et par réflexion. Ils sont regroupés sous la désignation de vitrage de contrôle solaire. Ils sont utilisés soit essentiellement pour assurer une protection solaire (fonction antisolaire) soit essentiellement pour assurer une isolation thermique de l'habitacle ou de l'habitation (fonction bas émissive).

Par antisolaire, on entend ainsi au sens de la présente invention la faculté du vitrage de limiter le flux énergétique, en particulier le rayonnement Infrarouge (IR) le traversant depuis l'extérieur vers l'intérieur de l'habitation ou de l'habitacle.

Par bas émissif, on entend un vitrage muni d'au moins une couche fonctionnelle lui conférant une émissivité normale $\varepsilon_n$ inférieure à 30%, de préférence inférieure à 20%, l'émissivité étant définie par la relation :

$$\varepsilon_n = 1 - R_n,$$

dans laquelle $R_n$ est le facteur de réflexion des infrarouges entre 5 et 50 micromètres, selon la normale (selon l'annexe A de la norme internationale ISO 10292) du vitrage.

D'une manière générale, toutes les caractéristiques lumineuses et énergétiques présentées dans la présente description sont obtenues selon les principes et méthodes décrits dans les normes internationale ISO 9050 (2003) et ISO 10292 (1994) et des normes européennes correspondantes EN 410 (1998) et EN 673 (1998), se rapportant à la détermination des caractéristiques lumineuses, solaires et énergétiques des vitrages utilisés dans le verre pour la construction.

En outre, associés au(x) substrat(s) verrier(s), ces revêtements doivent être esthétiquement plaisants, c'est-à-dire que le vitrage muni de son empilement doit présenter une colorimétrie, en transmission comme en réflexion, suffisamment neutre pour ne pas incommoder les utilisateurs, ou alternativement une teinte bleue ou verte, recherchée notamment dans le domaine du bâtiment. Ces revêtements sont de façon classique déposés par des techniques de dépôt du type CVD pour les plus simples ou le plus souvent à l'heure actuelle par des techniques de dépôt par pulvérisation sous vide, souvent appelé magnétron dans le domaine, notamment lorsque le revêtement est constitué d'un empilement complexe de couches successives dont les épaisseurs ne dépassent pas quelques nanomètres ou quelques dizaines de nanomètres.

Le plus souvent les empilements en couches minces présentent des propriétés de contrôle solaire essentiellement par les propriétés intrinsèques d'une ou plusieurs couches actives, désignées comme fonctionnelles dans la présente description. Par couche active ou fonctionnelle, on entend ainsi une couche agissant de manière sensible sur le flux de rayonnement solaire traversant ledit vitrage. Une telle couche active, de façon connue, peut fonctionner soit principalement en mode de réflexion du rayonnement Infrarouge, soit principalement en mode d'absorption du rayonnement Infrarouge. Le plus souvent, ces couches antisolaires fonctionnent pour partie par réflexion et pour partie par absorption, comme déjà expliqué précédemment.

Notamment, les empilements les plus performants commercialisés à l'heure actuelle incorporent au moins une couche fonctionnelle métallique du type Argent fonctionnant essentiellement sur le mode de la réflexion d'une majeure partie du rayonnement IR (infrarouge) incident. Leur émissivité normale ne dépasse pas quelques pourcents. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 ou 3 de celui-ci pour être protégées de l'humidité. De préférence, les empilements selon l'invention ne comprennent pas de telles couches du type Argent, ou encore de couches du type Or ou Platine ou alors en quantités très négligeables, notamment sous formes d'impuretés inévitables.

D'autres couches métalliques à fonction antisolaire ont également été reportées dans le domaine, comprenant des couches fonctionnelles du type Nb, Ta ou W ou des nitrures de ces métaux, tel que décrit par exemple dans la demande WO01/21540. Au sein de telles couches, le rayonnement solaire est cette fois majoritairement absorbé de manière non sélective par la ou les couches fonctionnelles, c'est-à-dire que le rayonnement IR (c'est-à-dire dont la longueur d'onde est compris entre environ 780 nm et 2500 nm) et le rayonnement visible (dont la longueur d'onde est compris entre environ 380 et 780 nm) sont absorbés sans distinction. Dans de tels vitrages, les valeurs de l'émissivité

normale $\varepsilon_n$ sont en général élevées. Des valeurs d'émissivité plus faibles peuvent uniquement être obtenues lorsque la couche fonctionnelle est relativement épaisse, en particulier d'au moins 20 nm pour le niobium métallique. En raison de l'absorption non sélective de cette même couche décrite précédemment, les coefficients de transmission lumineuse $T_L$ de tels vitrages sont nécessairement très faibles, généralement très inférieurs à 30%. Au final, au vu de telles caractéristiques, il n'apparait pas possible d'obtenir à partir de tels empilements des vitrages de contrôle solaire combinant des émissivités normales relativement basses, typiquement inférieures à 30%, et notamment de l'ordre de 25% ou même 20%, tout en conservant une transmission lumineuse suffisamment élevée, c'est à dire typiquement supérieure à 30%.

De tels vitrages comprenant des couches fonctionnelles du type Nb, Ta ou W ou des nitrures de ces métaux présentent ainsi des sélectivités, telles qu'illustrées par le ratio $T_L$/g, proche de 1 (facteur de Transmission Lumineuse/ facteur solaire g, tels que déterminés selon la norme EN 410).

De manière connue et classique, le facteur de transmission lumineuse ou transmission lumineuse $T_L$ correspond au pourcentage du flux lumineux incident, c'est-à-dire dans le domaine de longueurs d'onde 380 à 780 nm, traversant le vitrage, selon l'illuminant $D_{65}$.

De manière également bien connue, le facteur solaire g est égal au rapport de l'énergie traversant le vitrage (c'est-à-dire entrant dans le local) et de l'énergie solaire incidente. Plus particulièrement, il correspond à la somme du flux transmis directement à travers le vitrage et du flux absorbé par le vitrage (en y incluant en particulier les empilements de couches présents sur l'une de ses surfaces) puis réémis vers l'intérieur (le local).

La publication de brevet US 4,943,484 décrit des empilements dont la ou les couches fonctionnelles peuvent être constituées par un élément choisi parmi l'aluminium, l'argent, l'or ou le cuivre pur. Les empilements comprenant des couches minces en cuivre pur posent cependant le même problème de résistance hydrolytique que les couches de métaux précieux.

Selon un premier aspect, le but de la présente invention est de fournir des vitrages comprenant un empilement de couches leur conférant des propriétés de contrôle solaire telles que précédemment décrites, c'est-à-dire une transmission lumineuse $T_L$ élevée, typiquement supérieure à 30%, de préférence supérieure à 40%, voire même supérieure à 50%, et une émissivité normale $\varepsilon_n$ inférieure à 30%, voire inférieure à 20%, ou même inférieure à 10%, ledit empilement étant durable dans le temps, notamment lorsqu'il est directement disposé sur une face du vitrage exposé vers l'intérieur ou même l'extérieur du bâtiment ou de l'habitacle, sans précaution particulière.

Selon un deuxième aspect, le but de la présente invention est de fournir des vitrages comprenant un empilement de couches leur conférant des propriétés antisolaires et présentant une sélectivité élevée, au sens précédemment décrit, c'est-à-dire un rapport $T_L$/g (souvent appelé sélectivité dans le domaine) très supérieur à 1, en particulier sensiblement supérieur à 1,2, voire supérieur à 1,3, idéalement supérieur à 1,4 ou même supérieur à 1,5, ledit empilement étant durable dans le temps sans précaution particulière.

Un vitrage selon l'invention permet ainsi avantageusement de sélectionner le rayonnement le traversant, en favorisant la transmission des ondes lumineuses, c'est-à-dire dont la longueur d'onde est comprise entre environ 380 et 780 nm, et en absorbant sélectivement la majorité des radiations infrarouges, c'est-à-dire dont la longueur d'onde est supérieure à 780 nm, en particulier les infrarouges proches, c'est-à-dire dont la longueur d'onde est comprise entre environ 780nm et environ 1400 nm. Grâce à l'installation d'un vitrage selon la présente invention, il est ainsi possible de maintenir une forte illumination de la pièce ou de l'habitacle protégé par le vitrage tout en minimisant la quantité de chaleur y entrant.

Selon un autre aspect, le vitrage selon la présente invention présente également des propriétés d'isolation thermique grâce aux propriétés bas-émissives de la couche utilisée, permettant de limiter les échanges de chaleur cette fois entre l'intérieur et l'extérieur du bâtiment.

Selon un autre avantage de la présente invention, les vitrages munis des empilements selon l'invention sont simples à produire et permettent également une réduction sensible des coûts de production, par rapport à d'autres vitrages connus à propriétés antisolaires, notamment ceux comprenant un empilement à base d'argent.

Alternativement, les vitrages selon l'invention peuvent également être utilisés en tant que vitrage bas émissifs, pour assurer une isolation thermique de l'habitacle ou de l'habitation (fonction bas émissive), au regard de la valeur faible du coefficient d'émissivité $\varepsilon_n$ des empilements dans lesquels ils sont insérés.

Un autre but de la présente invention est de fournir des vitrages verriers antisolaires incorporant un empilement capable de subir un traitement thermique tel qu'une trempe, un bombage ou plus généralement un traitement thermique à des températures supérieures à 550°C, voire supérieure à 600°C, sans perte de ses propriétés optiques et énergétiques. En particulier, les vitrages munis de couches selon l'invention conservent de préférence après le traitement thermique, une transmission lumineuse élevée et de préférence présentent une couleur sensiblement inchangée en transmission ou en réflexion, cette couleur étant de préférence sensiblement neutre ou alternativement bleue-verte, telle que recherchée notamment dans le secteur du bâtiment.

En outre, ils sont résistants à l'humidité et à la rayure. Ils peuvent ainsi être avantageusement être utilisés en temps que vitrage simple (un seul substrat verrier), l'empilement étant avantageusement tourné vers la face interne du bâtiment ou de l'habitacle à protéger.

Bien entendu, ils peuvent également être utilisés dans les vitrages multiples, notamment doubles ou triples.

Plus précisément, la présente invention se rapporte à un vitrage à propriétés de contrôle solaire comprenant au moins un substrat transparent de préférence verrier sur lequel est déposé un empilement de couches, ledit empilement comprenant une couche constituée par un alliage comprenant du zinc et du cuivre, alliage dans lequel le rapport atomique Zn/(Cu+Zn) est supérieur à 35% et inférieur à 65%.

De préférence, ledit rapport atomique est supérieur à 45%.

De préférence, ledit rapport atomique est inférieur à 60%.

Ladite couche constituée dans un alliage comprenant du zinc et du cuivre est de préférence la seule couche fonctionnelle de l'empilement, c'est-à-dire qu'elle est à l'origine des propriétés de contrôle solaire du vitrage ou au moins de l'essentiel desdites propriétés. En particulier, les empilements selon l'invention ne comprennent de préférence pas d'autres couches à propriétés bas-émissives. En particulier, les empilements selon l'invention ne comprennent pas de préférence de couches constituées à partir de métaux précieux tels que l'argent ou l'or.

Selon des modes préférés de réalisation de la présente invention, qui peuvent bien évidemment le cas échéant être combinés entre eux :

- L'épaisseur de ladite couche fonctionnelle est comprise entre 5 et 35 nanomètres, de préférence entre 8 et 30 nanomètres, en particulier entre 8 et 25 nanomètres, ou même entre 10 et 20 nanomètres.
- Le cuivre et le zinc représentent au total, au moins 80% atomique, de préférence au moins 90% atomique, voire au moins 95% atomique des éléments métalliques présents dans l'alliage.
- L'alliage est constitué essentiellement, voire uniquement de zinc et de cuivre (les autres éléments n'étant alors présents que sous forme d'impuretés inévitables).
- L'empilement est constitué par la succession des couches suivantes, à partir de la surface du substrat verrier:

  - une ou plusieurs couches inférieures de protection de la couche d'alliage contre la migration des ions alcalins issus du substrat verrier, en particulier en matériaux diélectriques tels que des oxydes, des nitrures ou des oxynitures notamment d'au moins un élément choisi parmi le zinc, l'étain, le silicium, l'aluminium, le titane, le zirconium, la ou lesdites couches présentant une épaisseur physique, au total, comprise entre 5 et 150 nm,
  - ladite couche d'alliage à base de zinc et de cuivre,
  - une ou plusieurs couches supérieures de protection de la couche d'alliage contre l'oxygène de l'air, notamment lors d'un traitement thermique tel qu'une trempe ou un recuit, en particulier en matériaux diélectriques tels que des oxydes, des nitrures ou des oxynitures notamment d'au moins un élément choisi parmi le zinc, l'étain, le silicium, l'aluminium, le titane, le zirconium, la ou lesdites couches étant d'épaisseur physique, au total, comprise entre 5 et 150 nm.

- La ou les couches de protection inférieures et supérieures sont choisies parmi le nitrure de silicium éventuellement dopé par Al, Zr, B, le nitrure d'aluminium AlN, l'oxyde d'étain, un oxyde mixte de zinc ou d'étain $SnyZn_zO_x$, l'oxyde de silicium $SiO_2$, l'oxyde de titane $TiO_2$, les oxynitrures de silicium $SiO_xNy$.
- L'empilement comprend la succession des couches suivantes, à partir de la surface du substrat verrier:

  - une couche inférieure d'épaisseur comprise entre 5 et 150 nm, de préférence entre 30 et 70 nm, de nitrure de Silicium éventuellement dopé par Al, Zr, B ou de nitrure d'aluminium AlN,
  - ladite couche d'alliage à base de zinc et de cuivre,
  - une couche supérieure d'épaisseur comprise entre 5 et 150 nm, de préférence entre 30 et 70 nm, de nitrure de Silicium éventuellement dopé par Al, Zr, B ou de nitrure d'aluminium AlN.

- L'empilement comprend au moins deux couches d'alliage comprenant, constituée essentiellement ou constituée par du zinc et du cuivre tel que précédemment décrit, chacune desdites couches étant séparée dans l'empilement de la suivante par au moins une couche intermédiaire d'un matériau diélectrique en particulier tel que choisi dans la liste précédente.
- Ladite couche intermédiaire comprend au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane, les oxynitrures de silicium $SiO_xN_y$.
- L'empilement comprend la succession des couches suivantes, à partir de la surface du substrat verrier:

  - une ou plusieurs couches inférieures d'épaisseur totale cumulée inférieure à 150 nm, choisie parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane, les oxynitrures de silicium $SiO_xN_y$,

- une première couche fonctionnelle à base de l'alliage de zinc et de cuivre tel que précédemment décrit, l'épaisseur de ladite couche fonctionnelle étant notamment comprise entre 5 et 25 nm, de préférence entre 5 et 15 nm,

- une couche intermédiaire d'épaisseur comprise entre 5 et 150 nm, de préférence entre 5 et 50 nm, tout particulièrement entre 5 et 15 nm, comprenant au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane, les oxynitrures de silicium $SiO_xN_y$, de préférence de nitrure de silicium éventuellement dopé par Al, Zr, B,

- une deuxième couche fonctionnelle à base de l'alliage de zinc et du cuivre, l'épaisseur de ladite couche fonctionnelle étant notamment comprise entre 5 et 25 nm, de préférence entre 5 et 15 nm,

- une ou plusieurs couches supérieures d'épaisseur totale cumulée inférieure à 150 nm, choisie parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane, les oxynitrures de silicium $SiO_xN_y$.

- L'empilement comprend la succession des couches suivantes, à partir de la surface du substrat verrier:

  - une couche inférieure d'épaisseur comprise entre 5 et 150 nm, de préférence entre 30 et 70 nm, de nitrure de Silicium éventuellement dopé par Al, Zr, B ou de nitrure d'aluminium AlN,

  - une première couche fonctionnelle constituée par ledit alliage à base de zinc et de cuivre tel que précédemment décrit, l'épaisseur de ladite couche fonctionnelle étant notamment comprise entre 5 et 25 nm, de préférence entre 5 et 15 nm,

  - une couche intermédiaire d'épaisseur comprise entre 5 et 150 nm, de préférence entre 5 et 50 nm, tout particulièrement entre 5 et 15 nm, comprenant au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane $TiO_2$, les oxynitrures de silicium $SiO_xN_y$, de préférence de nitrure de silicium éventuellement dopé par Al, Zr, B,

  - une deuxième couche fonctionnelle d'alliage comprenant, constitué essentiellement par ou constitué par du Zinc et du Cuivre, l'épaisseur de ladite couche fonctionnelle étant notamment comprise entre 5 et 25 nm, de préférence entre 5 et 15 nm,

  - une couche supérieure d'épaisseur comprise entre 5 et 150 nm, de préférence entre 30 et 70 nm, de nitrure de Silicium éventuellement dopé par Al, Zr, B ou le nitrure d'aluminium AlN.

- l'empilement comprend en outre au moins une couche protectrice supplémentaire de la ou des couches d'alliage, ladite couche supplémentaire étant constituée d'un matériau choisi dans le groupe constitué par Ti, Mo, Al, Nb, Sn, Zn (ou d'un alliage comprenant deux de ces éléments tel Sn et Zn), NiCr, TiN, NbN, lesdites couches protectrices supplémentaires étant disposées au contact et respectivement au dessus et au dessous de la ou des couches fonctionnelles, et ayant une épaisseur physique comprise entre environ 1 nm et environ 3 nm. Une telle couche protectrice permet notamment selon l'invention de limiter les variations de la transmission lumineuse et de la couleur du vitrage aussi bien en réflexion qu'en transmission, lorsque celui-ci est soumis doit être soumis à un traitement thermique tel qu'une trempe, un bombage etc.

Un procédé de fabrication d'un vitrage antisolaire comprend par exemple les étapes suivantes :

- fabrication d'un substrat verrier,
- dépôt sur le substrat verrier d'un empilement de couches par une technique de pulvérisation cathodique sous vide assistée par magnétron, la couche fonctionnelle antisolaire étant obtenue par pulvérisation d'une cible constituée par un alliage de Zinc et de Cuivre, le pourcentage atomique de Zinc dans l'alliage Zn/ (Cu+Zn) étant compris entre 35% et 65%, notamment entre 45 et 55%, dans une atmosphère résiduelle d'un gaz neutre tel que l'argon.

Par l'expression « constitué par », on entend au sens de la présente description que l'alliage constituant la couche fonctionnelle comprend uniquement ou très majoritairement les éléments cuivre et zinc, les autres éléments n'étant alors présents que dans une concentration très mineure n'influant pas ou quasiment pas sur les propriétés recherchées du matériau. Par le terme « impuretés inévitables » on entend ainsi que la présence dans l'alliage de zinc et de cuivre de certains éléments supplémentaires, en particulier métalliques, ne peut être évitée en raison typiquement de la présence de ces impuretés dans les sources de cuivre et de zinc initialement utilisées ou en raison du mode de dépôt de la couche de zinc et de cuivre. Généralement, la proportion atomique de chacun des éléments considérés comme impureté dans l'alliage est inférieure à 1%, de préférence est inférieure à 0,5% et de manière très préférée est inférieure à 0,1% atomique.

Les exemples qui suivent sont donnés à titre purement illustratifs et ne limitent sous aucun des aspects décrits la portée de la présente invention. A des fins de comparaison, tous les empilements des exemples qui suivent sont synthétisés sur le même substrat verrier Planilux®. Toutes les couches des empilements ont été déposées selon les techniques classiques bien connues de dépôts sous vide par pulvérisation magnétron.

Exemple 1 (selon l'invention) :

Dans cet exemple selon l'invention, on dépose, selon les techniques magnétrons classiques, sur un substrat en verre du type Planilux® commercialisé par la société déposante, un empilement constitué par la séquence de couches suivantes:

| Verre | /$Si_3N_4$ | / $Cu_{45}Zn_{55}$* | /$Si_3N_4$ |
|---|---|---|---|
| - | (30nm) | (10nm) | (10nm) |
| *55% atomique de Zn, 45% atomique de Cuivre | | | |

La couche métallique fonctionnelle en alliage de Zinc et de Cuivre est obtenue par la technique de pulvérisation magnétron à partir de deux cibles de zinc et de cuivre disposées dans un même compartiment du dispositif, chaque cible ayant une alimentation spécifique permettant de régler spécifiquement et indépendamment la puissance appliquée sur chaque cible. Il est ainsi possible d'ajuster la composition de la couche déposée en réglant la puissance appliquée sur chaque cible. Selon ce premier exemple, à titre d'information et pour l'appareillage utilisé, la puissance appliquée sur la cible de zinc est d'environ 130W et la puissance appliquée sur la cible de cuivre est d'environ 100W. Les couches supérieures et inférieures de nitrure de silicium ont été obtenues dans le même dispositif magnétron par pulvérisation d'une cible de silicium comprenant 8% massique d'aluminium dans des compartiments précédant et succédant celui utilisé pour le dépôt de la couche d'alliage. La pulvérisation de la cible de silicium est effectuée dans une atmosphère d'azote, pour l'obtention de la couche mince de nitrure. Aucune difficulté n'a été observée lors du dépôt des différentes couches par les techniques de pulvérisation assistée par champ magnétique (magnétron).

La composition de la couche d'alliage métallique obtenue a été vérifié par analyse microsonde de Castaing (aussi appelé EPMA ou electron probe microanalyser selon l'appellation Anglaise) et SIMS (spectrométrie de masse à ionisation secondaire.

Le substrat muni de son empilement a ensuite été soumis à un traitement thermique consistant en un chauffage à 550°C pendant 3 minutes.

Exemple 2 (selon l'invention) :

Dans cet exemple, on pratique de façon identique à l'exemple 1 mais on fait varier les puissances. La puissance appliquée sur la cible de zinc est de 110 W et la puissance appliquée sur la cible de cuivre est de 120 W. On obtient un empilement dont la couche fonctionnelle est cette fois constituée d'un alliage de zinc et de cuivre dans des proportions molaires respectives 45/55. On obtient au final un empilement constitué par la séquence de couches suivantes:

| Verre | /$Si_3N_4$ | / $Cu_{55}Zn_{45}$ | /$Si_3N_4$ |
|---|---|---|---|
| | (30nm) | (10 nm) | (10nm) |
| *55% atomique de cuivre, 45% atomique de zinc | | | |

Le substrat muni de son empilement est ensuite soumis au même traitement thermique que pour l'exemple 1.

Exemple 3 (comparatif) :

Dans cet exemple, on pratique de façon identique à l'exemple 1 mais on fait varier les puissances. La puissance appliquée sur la cible de zinc est de 80 W et la puissance appliquée sur la cible de cuivre est de 145 W. On obtient un empilement dont la couche fonctionnelle est cette fois constituée d'un alliage de zinc et de cuivre dans des proportions molaires respectives 30/70.

Plus précisément, on dépose, selon les techniques magnétrons classiques, sur le même substrat en verre du type Planilux®, un empilement constitué par la séquence de couches suivantes:

|  | Verre | /Si$_3$N$_4$ (30nm) | /Cu$_{70}$Zn$_{30}$* (10nm) | /Si$_3$N$_4$ (10nm) |
|---|---|---|---|---|

*70% atomique de cuivre, 30% atomique de zinc

Le substrat muni de son empilement est ensuite soumis au même traitement thermique que pour l'exemple 1.

Exemple 4 (comparatif) :

Dans cet exemple, on pratique de façon identique à l'exemple 1 mais on fait varier les puissances. La puissance appliquée sur la cible de zinc est de 170 W et la puissance appliquée sur la cible de cuivre est de 55 W. On obtient un empilement dont la couche fonctionnelle est cette fois constituée d'un alliage de zinc et de cuivre dans des proportions molaires respectives 70/30.

Plus précisément, on dépose, selon les techniques magnétrons classiques, sur le même substrat en verre du type Planilux®, un empilement constitué par la séquence de couches suivantes:

|  | Verre | /Si$_3$N$_4$ (30nm) | /Cu$_{30}$Zn$_{70}$* (10nm) | /Si$_3$N$_4$ (10 nm) |
|---|---|---|---|---|

*30% atomique de cuivre, 70% atomique de zinc

Le substrat muni de son empilement est ensuite soumis au même traitement thermique que pour l'exemple 1.

Exemple 5 (comparatif) :

Dans cet exemple, on pratique de façon identique à l'exemple 1 et on obtient un empilement sensiblement identique par la technique de pulvérisation magnétron, à l'exception de la cible utilisée pour le dépôt de la couche fonctionnelle, qui est cette fois constituée de cuivre uniquement.

Plus précisément, on dépose, selon les techniques magnétrons classiques, sur le même substrat en verre du type Planilux®, un empilement constitué par la séquence de couches suivantes:

|  | Verre | /Si$_3$N$_4$ (30nm) | / Cu (10nm) | /Si$_3$N$_4$ (10nm) |
|---|---|---|---|---|

Le substrat muni de son empilement est ensuite soumis au même traitement thermique que pour l'exemple 1.

Sur les vitrages obtenus selon les exemples 1 à 5, on mesure le facteur de transmission lumineuse T$_L$, ainsi que la résistance par carré de l'empilement, avant et après le traitement thermique, par la méthode classique des quatre pointes. De manière classique, la mesure de la R par carré est considérée comme une première indication des émissivités attendues relatives des différents empilements.

Les valeurs des mesures effectuées sur les échantillons selon les exemples 1 et 2 selon l'invention et selon les exemples comparatifs 3 à 5 sont regroupés dans le tableau 1 ci-dessous :

Tableau 1

|  |  | Exemple 1 (invention) | Exemple 2 (invention) | Exemple 3 (comparatif) | Exemple 4 (comparatif) | Exemple 5 (comparatif) |
|---|---|---|---|---|---|---|
| Couche fonctionnelle | | Cu$_{45}$Zn$_{55}$ | CU$_{55}$Zn$_{45}$ | Cu$_{70}$Zn$_{30}$ | Cu$_{30}$Zn$_{70}$ | Cu |
| Epaisseur couche fonctionnelle (nm) | | 10 | 10 | 10 | 10 | 10 |
| T$_L$ (%) | Avant trempe | 58 | 52 | 60 | 20 | 60 |
|  | Après trempe | 63 | 60 | 65 | 22 | 65 |

(suite)

|  |  | Exemple 1 (invention) | Exemple 2 (invention) | Exemple 3 (comparatif) | Exemple 4 (comparatif) | Exemple 5 (comparatif) |
|---|---|---|---|---|---|---|
| R/carré ($\Omega/\square$) | Avant trempe | 13 | 20 | 20 | 50 | 7 |
|  | Après trempe | 9 | 13 | 12 | 38 | 5 |

Pour vérifier la résistance chimique des couches fonctionnelles déposées selon les exemples précédents et après le traitement thermique, on a soumis chaque échantillon décrit précédemment à un test de résistance hydrolytique (simulation de climat) selon le protocole suivant :

Dans une chambre fermée, le vitrage muni de son empilement est soumis à des conditions d'humidité et température sévères (95% d'humidité relative à 50°C) pendant une durée totale de 28 jours, pour en provoquer le vieillissement accéléré.

Les résultats sont donnés dans le tableau 2 qui suit :

Tableau 2

|  |  | Exemple1 | Exemple2 | Exemple3 | Exemple4 | Exemple5 |
|---|---|---|---|---|---|---|
| Couche fonctionnelle |  | $Cu_{45}Zn_{55}$ | $Cu_{55}Zn_{45}$ | $Cu_{70}Zn_{30}$ | $C_{U30}Zn_{70}$ | Cu |
| R/carré ($\Omega/\square$) | initiale | 10 | 13 | 12 | 38 | 7 |
|  | 4 jours | 11 | 15 | 13 | 40 | isolant |
|  | 14 jours | 15 | 19 | 21 | 147 |  |
|  | 30 jours | 21 | 41 | 95 | isolant |  |

La comparaison des données reportées dans les tableaux 1 et 2 démontre les avantages et la supériorité liés à l'utilisation d'une couche fonctionnelle selon l'invention.

En particulier :

Par comparaison des données reportées dans le tableau 1, les vitrages comprenant une couche fonctionnelle selon l'invention présentent des valeurs de la transmission lumineuse proche de celle des couches en cuivre, notamment après recuit. La couche contenant majoritairement du zinc présente au contraire une transmission lumineuse relativement faible et insuffisante pour l'application.

Les mesures de conductivité électronique et notamment de R par carré sont relativement similaires et faibles, excepté pour l'échantillon selon l'exemple 4. L'échantillon selon l'exemple 1 présente au contraire une résistance par carré particulièrement faible, qui se rapproche de celle de l'échantillon de référence selon l'exemple 5 incorporant une couche fonctionnelle en cuivre pur.

Les résultats des tests reportés dans le tableau 2 indiquent clairement que l'échantillon selon l'exemple 5 de référence est immédiatement dégradé lorsqu'il est soumis à un test de résistance climatique. Les échantillons selon les exemples 3 et 4 présentent une résistance un peu améliorée, mais très nettement insuffisante. Seuls les échantillons selon les exemples 1 et 2, conformes à la présente invention, présentent une bonne résistance hydrolytique, et tout particulièrement l'échantillon selon l'exemple 1, qui ne montre que de très faibles variations de ses propriétés de conduction électronique, même après le trentième jour de test.

Exemple 6 (selon l'invention) :

Par le même procédé magnétron, on synthétise sur un verre Planilux® l'empilement suivant :

| Verre | $/Si_3N_4$ | /Ti | $/Zn_{49}Cu_{51}$* | /Ti | $/Si_3N_4$ |
|---|---|---|---|---|---|

(suite)

| - | (40nm) | (1nm) | (27nm) | (1nm) | (52nm) |
|---|--------|-------|--------|-------|--------|
| *55% atomique de Zn, 45% atomique de Cuivre | | | | | |

La couche métallique fonctionnelle en alliage de Zinc et de Cuivre est obtenue par la technique de pulvérisation magnétron à partir d'une cible constituée par un alliage comprenant environ 55% atomique de Zinc et environ 45% atomique de Cuivre. Les couches supérieures et inférieures de nitrure de silicium ont été obtenues dans le même dispositif magnétron par pulvérisation d'une cible de silicium comprenant 8% massique d'aluminium dans des compartiments précédant et succédant celui utilisé pour le dépôt de l'alliage. La pulvérisation de la cible de silicium est effectuée dans une atmosphère d'azote, pour l'obtention de la couche mince de nitrure.

La couche de titane est obtenue par la technique de pulvérisation magnétron, à partir d'une cible de titane métallique.

L'analyse par microsonde de Castaing et SIMS de la couche finalement obtenue indique que sa composition correspond à la stoechiométrie molaire $Zn_{49}Cu_{51}$, un peu différente de celle de la cible initiale.

Le substrat muni de son empilement est soumis au traitement thermique consistant en un traitement thermique à 620° pendant 8 minutes puis sortie du four. Ce traitement est représentatif des conditions subies industriellement par le vitrage si celui-ci doit être trempé.

Les caractéristiques thermiques et lumineuses ont ensuite été mesurées conformément à la norme EN410 citée précédemment.

Les données mesurées pour l'échantillon selon l'exemple 6 sont regroupées dans le tableau 3 qui suit :

Tableau 3

| Transmission lumineuse $T_L$ (%) | Emissivité (%) | Facteur Solaire g (%) | Sélectivité $T_L$/g |
|---|---|---|---|
| 50 | 4,4 | 29 | 1, 72 |

On mesure une sélectivité très élevée, de l'ordre de 1,72 pour un vitrage muni de l'empilement selon l'invention.

A titre de comparaison, pour un empilement classique comprenant une couche d'argent de 18 nanomètres dans la succession de couches suivantes :

Planilux /Si3N4 (45nm) /NiCr (2)/Ag(18)/NiCr(1)/Si3N4(30)/TiOx(9),

on a mesuré les paramètres suivants :

$T_L$ = 51 et g = 33, soit une sélectivité s = 1,54.

## Revendications

1. Vitrage à propriété de contrôle solaire comprenant au moins un substrat de préférence verrier sur lequel est déposé un empilement de couches, ledit empilement comprenant une couche constituée dans un alliage métallique comprenant du Zinc et du Cuivre, alliage dans lequel le rapport atomique Zn/(Cu+Zn) est supérieur à 35% et inférieur à 65% et dans lequel le cuivre et le zinc représentent au total au moins 80% atomique des éléments métalliques présents dans l'alliage.

2. Vitrage à propriété de contrôle solaire selon la revendication 1, comprenant une couche constituée dans un alliage comprenant du Zinc et du Cuivre dans lequel le rapport atomique Zn/(Cu+Zn) est supérieur à 45% et inférieur à 60%.

3. Vitrage à propriété de contrôle solaire selon l'une des revendications précédentes, dans lequel l'épaisseur de ladite couche d'alliage est comprise entre 5 et 35 nanomètres, de préférence entre 8 et 25 nanomètres.

4. Vitrage à propriété de contrôle solaire selon l'une des revendications précédentes, dans lequel le cuivre et le zinc représentent au total au moins 90% atomique des éléments métalliques présents dans l'alliage.

5. Vitrage à propriété de contrôle solaire selon l'une des revendications précédentes, dans lequel l'alliage ne comprend que du zinc, du cuivre et des impuretés inévitables.

**6.** Vitrage à propriété de contrôle solaire selon l'une des revendications précédentes, dans lequel ledit empilement ne comprend pas de couches constituées à partir de métaux précieux tels que l'argent ou l'or.

**7.** Vitrage antisolaire selon l'une des revendications précédentes, dans lequel l'empilement est constitué par la succession des couches suivantes, à partir de la surface du substrat verrier:

- une ou plusieurs couches inférieures de protection de la couche fonctionnelle contre la migration des ions alcalins issus du substrat verrier, d'épaisseur géométrique, au total, comprise entre 5 et 150 nm,
- ladite couche d'alliage,
- une ou plusieurs couches supérieures de protection de la couche fonctionnelle contre l'oxygène de l'air, notamment lors d'un traitement thermique tel qu'une trempe ou un recuit, la ou lesdites couches étant d'épaisseur géométrique, au total, comprise entre 5 et 150 nm.

**8.** Vitrage à propriété de contrôle solaire selon la revendication précédente, dans lequel la ou les couches de protection inférieures et supérieures sont choisies parmi le nitrure de Silicium éventuellement dopé par Al, Zr, B, le nitrure d'aluminium AlN, l'oxyde d'étain, un oxyde mixte de zinc ou d'étain, l'oxyde de silicium, l'oxyde de titane, les oxynitrures de silicium.

**9.** Vitrage à propriété de contrôle solaire selon l'une des revendications précédentes dans lequel l'empilement comprend la succession des couches suivantes, à partir de la surface du substrat verrier:

- une couche inférieure d'épaisseur comprise entre 5 et 150 nm, de préférence entre 30 et 70 nm, de nitrure de Silicium éventuellement dopé par Al, Zr, B ou de nitrure d'aluminium AlN,
- ladite couche d'alliage,
- une couche supérieure d'épaisseur comprise entre 5 et 150 nm, de préférence comprise entre 30 et 70 nm, de nitrure de Silicium éventuellement dopé par Al, Zr, B ou de nitrure d'aluminium AlN.

**10.** Vitrage à propriété de contrôle solaire selon l'une des revendications précédentes, dans lequel l'empilement comprend au moins deux couches fonctionnelles constituées par ledit alliage, chacune desdites couches étant séparée dans l'empilement de la suivante par au moins une couche intermédiaire d'un matériau diélectrique.

**11.** Vitrage antisolaire selon la revendication précédente, dans lequel ladite couche intermédiaire comprend au moins une couche d'un matériau choisi parmi le nitrure de silicium éventuellement dopé par Al, Zr, B, le nitrure d'aluminium, l'oxyde d'étain, un oxyde mixte de zinc ou d'étain, l'oxyde de silicium, l'oxyde de titane, un oxynitrure de silicium.

**12.** Vitrage antisolaire selon l'une des revendications précédentes, dans lequel l'empilement comprend la succession des couches suivantes, à partir de la surface du substrat verrier:

- une couche inférieure d'épaisseur comprise entre 5 et 150 nm, de préférence entre 30 et 70 nm, de nitrure de Silicium éventuellement dopé par Al, Zr, B ou le nitrure d'aluminium AlN,
- une première couche fonctionnelle constituée par ledit alliage,
- une couche intermédiaire d'épaisseur comprise entre 5 et 150 nm, comprenant au moins une couche d'un matériau choisi parmi le nitrure de Silicium éventuellement dopé par Al, Zr, B, le nitrure d'aluminium AlN, l'oxyde d'étain, un oxyde mixte de zinc ou d'étain $Sn_yZn_zO_x$, l'oxyde de silicium $SiO_2$, l'oxyde de titane $TiO_2$, les oxynitrures de silicium $SiO_xN_y$, de préférence de nitrure de silicium éventuellement dopé,
- une deuxième couche fonctionnelle constituée par ledit alliage,
- une couche supérieure d'épaisseur comprise entre 5 et 150 nm, de préférence entre 30 et 70 nm, de nitrure de Silicium éventuellement dopé par Al, Zr, B ou le nitrure d'aluminium AlN.

**13.** Vitrage antisolaire selon l'une des revendications précédentes dans lequel l'empilement comprend en outre au moins une couche protectrice supplémentaire de la ou des couches d'alliage, ladite couche supplémentaire étant constituée d'un matériau choisi dans le groupe constitué par Ti, Mo, Al, Nb, Sn, Zn et leurs alliages, NiCr, TiN, NbN, la ou lesdites couches protectrices supplémentaires étant disposées au contact et respectivement au dessus et/ou au dessous de la ou des couches fonctionnelles, et ayant une épaisseur géométrique comprise entre environ 1 nm et environ 5 nm.

**Patentansprüche**

1. Verglasung mit Sonnenschutzeigenschaft, umfassend mindestens ein Substrat, vorzugsweise aus Glas, auf das ein Stapel von Schichten aufgebracht ist, wobei der Stapel eine Schicht umfasst, die aus einer Zink und Kupfer umfassenden Metalllegierung besteht, wobei in der Legierung das Atomverhältnis Zn/ (Cu+Zn) größer als 35% und kleiner als 65% ist und in der das Kupfer und das Zink insgesamt mindestens 80 Atom-% der in der Legierung vorhandenen Metallelemente darstellen.

2. Verglasung mit Sonnenschutzeigenschaft nach Anspruch 1, umfassend eine Schicht, die aus einer Zink und Kupfer umfassenden Legierung besteht, in der das Atomverhältnis Zn/ (Cu+Zn) größer als 45% und kleiner als 60% ist.

3. Verglasung mit Sonnenschutzeigenschaft nach einem der vorhergehenden Ansprüche, wobei die Dicke der Legierungsschicht zwischen 5 und 35 Nanometer, vorzugsweise zwischen 8 und 25 Nanometer beträgt.

4. Verglasung mit Sonnenschutzeigenschaft nach einem der vorhergehenden Ansprüche, wobei das Kupfer und das Zink insgesamt mindestens 90 Atom-% der in der Legierung vorhandenen Metallelemente darstellen.

5. Verglasung mit Sonnenschutzeigenschaft nach einem der vorhergehenden Ansprüche, wobei die Legierung nur Zink, Kupfer und unvermeidbare Verunreinigungen umfasst.

6. Verglasung mit Sonnenschutzeigenschaft nach einem der vorhergehenden Ansprüche, wobei der Stapel keine aus Edelmetallen, wie Silber oder Gold, bestehenden Schichten enthält.

7. Sonnenschutzglas nach einem der vorhergehenden Ansprüche, wobei der Stapel aus der Abfolge der folgenden Schichten, von der Oberfläche des Glassubstrats ausgehend, besteht:

   - einer oder mehreren unteren Schichten zum Schutz der Funktionsschicht gegen die Wanderung von aus dem Glassubstrat herrührenden Alkaliionen mit einer geometrischen Gesamtdicke zwischen 5 und 150 nm,
   - der Legierungsschicht,
   - einer oder mehreren oberen Schichten zum Schutz der Funktionsschicht gegen Sauerstoff aus der Luft, insbesondere während einer thermischen Behandlung, wie Tempern oder Glühen, wobei die Schicht(en) eine geometrische Gesamtdicke zwischen 5 und 150 nm aufweisen.

8. Verglasung mit Sonnenschutzeigenschaft nach dem vorhergehenden Anspruch Verglasungen, wobei die untere(n) und die obere(n) Schutzschicht(en) aus Siliziumnitrid, das gegebenenfalls mit Al, Zr, B dotiert ist, Aluminiumnitrid AlN, Zinnoxid, einem gemischten Zink- oder Zinnoxid, Siliziumdioxid, Titandioxid, Siliziumoxynitriden ausgewählt ist/sind.

9. Verglasung mit Sonnenschutzeigenschaft nach einem der vorhergehenden Ansprüche, wobei der Stapel die Abfolge der folgenden Schichten, von der Oberfläche des Glassubstrats ausgehend, aufweist:

   - eine untere Schicht mit einer Dicke zwischen 5 und 150 nm, vorzugsweise zwischen 30 und 70 nm, aus gegebenenfalls mit Al, Zr, B dotiertem Siliziumnitrid oder aus Aluminiumnitrid AlN,
   - die Legierungsschicht,
   - eine obere Schicht mit einer Dicke zwischen 5 und 150 nm, vorzugsweise zwischen 30 und 70 nm, aus gegebenenfalls mit Al, Zr, B dotiertem Siliziumnitrid oder Aluminiumnitrid AlN.

10. Verglasung mit Sonnenschutzeigenschaft nach einem der vorhergehenden Ansprüche, wobei der Stapel mindestens zwei Funktionsschichten umfasst, die aus der Legierung bestehen, wobei jede der Schichten in dem Stapel von der nächsten durch mindestens eine Zwischenschicht aus einem dielektrischen Material getrennt ist.

11. Sonnenschutzglas nach dem vorhergehenden Anspruch, wobei die Zwischenschicht mindestens eine Schicht aus einem Material umfasst, das aus gegebenenfalls mit Al, Zr, B dotiertem Siliziumnitrid, Aluminiumnitrid, Zinnoxid, einem gemischten Zink- oder Zinnoxid, Siliziumdioxid, Titandioxid, einem Siliziumoxynitrid ausgewählt ist.

12. Sonnenschutzglas nach einem der vorhergehenden Ansprüche, wobei der Stapel die Abfolge der folgenden Schichten, von der Oberfläche des Glassubstrats ausgehend, aufweist:

- eine untere Schicht mit einer Dicke zwischen 5 und 150 nm, vorzugsweise zwischen 30 und 70 nm, aus gegebenenfalls mit Al, Zr, B dotiertem Siliziumnitrid oder Aluminiumnitrid AlN,
- eine erste aus der Legierung bestehende Funktionsschicht,
- eine Zwischenschicht mit einer Dicke zwischen 5 und 150 nm, die mindestens eine Schicht aus einem Material umfasst, das aus gegebenenfalls mit Al, Zr, B dotiertem Siliziumnitrid, Aluminiumnitrid AlN, Zinnoxid, einem gemischten Zink- oder Zinnoxid $Sn_yZn_zO_x$, Siliziumdioxid $SiO_2$, Titandioxid $TiO_2$, Siliziumoxynitriden $SiO_xN_y$, vorzugsweise aus gegebenenfalls dotiertem Siliziumnitrid ausgewählt ist,
- eine zweite aus der Legierung bestehende Funktionsschicht,
- eine obere Schicht mit einer Dicke zwischen 5 und 150 nm, vorzugsweise zwischen 30 und 70 nm, aus gegebenenfalls mit Al, Zr, B dotiertem Siliziumnitrid oder Aluminiumnitrid AlN.

13. Sonnenschutzglas nach einem der vorhergehenden Ansprüche, wobei der Stapel außerdem mindestens eine zusätzliche Schutzschicht für die Legierungsschicht(en) umfasst, wobei die zusätzliche Schicht aus einem Material besteht, das aus der aus Ti, Mo, Al, Nb, Sn, Zn und deren Legierungen, NiCr, TiN, NbN bestehenden Gruppe ausgewählt ist, wobei die zusätzliche(n) Schutzschicht(en) in Kontakt mit und jeweils oberhalb und/oder unterhalb der Funktionsschicht(en) angeordnet ist/sind und eine geometrische Dicke zwischen etwa 1 nm und etwa 5 nm besitzen.

## Claims

1. A glazing unit with solar-control properties, comprising at least one preferably glass substrate on which a multilayer is deposited, said multilayer comprising a layer made of a metal alloy comprising zinc and copper, in which alloy the Zn/ (Cu+Zn) atomic ratio is higher than 35% and lower than 65%, and in which the copper and zinc represent in total at least 80 at% of the metal elements present in the alloy.

2. The glazing unit with solar-control properties as claimed in claim 1, comprising a layer made of an alloy comprising zinc and copper in which the Zn/ (Cu+Zn) atomic ratio is higher than 45% and lower than 60%.

3. The glazing unit with solar-control properties as claimed in one of the preceding claims, in which the thickness of said alloy layer is comprised between 5 and 35 nanometers and preferably between 8 and 25 nanometers.

4. The glazing unit with solar-control properties as claimed in one of the preceding claims, in which the copper and zinc represent in total at least 90 at% of the metal elements present in the alloy.

5. The glazing unit with solar-control properties as claimed in one of the preceding claims, in which the alloy comprises only zinc, copper and unavoidable impurities.

6. The glazing unit with solar-control properties as claimed in one of the preceding claims, in which said multilayer does not comprise layers made of precious metals such as silver or gold.

7. The anti-solar glazing unit as claimed in one of the preceding claims, in which the multilayer consists of the following layers in succession, from the surface of the glass substrate:

- one or more lower protective layers for protecting the functional layer from the migration of alkalimetal ions originating from the glass substrate, of geometric thickness, in total, comprised between 5 and 150 nm;
- said alloy layer; and
- one or more upper protective layers for protecting the functional layer from oxygen from the air, especially during a heat treatment such as a temper or an anneal, said one or more layers being of geometric thickness, in total, comprised between 5 and 150 nm.

8. The glazing unit with solar-control properties as claimed in the preceding claim, in which the one or more lower and upper protective layers are chosen from silicon nitride, optionally doped with Al, Zr and/or B, aluminum nitride AlN, tin oxide, a mixed tin zinc oxide, silicon oxide, titanium oxide and silicon oxynitrides.

9. The glazing unit with solar-control properties as claimed in one of the preceding claims, in which the multilayer comprises the following layers in succession, from the surface of the glass substrate:

- a lower layer, of thickness comprised between 5 and 150 nm and preferably between 30 and 70 nm, of silicon nitride, optionally doped with Al, Zr and/or B, or of aluminum nitride AlN;
- said alloy layer; and
- an upper layer, of thickness comprised between 5 and 150 nm and preferably between 30 and 70 nm, of silicon nitride, optionally doped with Al, Zr and/or B, or of aluminum nitride AlN.

10. The glazing unit with solar-control properties as claimed in one of the preceding claims, in which the multilayer comprises at least two functional layers made of said alloy, each of said layers being separated in the multilayer from the following by at least one intermediate layer of a dielectric material.

11. The anti-solar glazing unit as claimed in the preceding claim, in which said intermediate layer comprises at least one layer of a material chosen from silicon nitride, optionally doped with Al, Zr and/or B, aluminum nitride, tin oxide, a mixed tin zinc oxide, silicon oxide, titanium oxide and a silicon oxynitride.

12. The anti-solar glazing unit as claimed in one of the preceding claims, in which the multilayer comprises the following layers in succession, from the surface of the glass substrate:

- a lower layer, of thickness comprised between 5 and 150 nm and preferably between 30 and 70 nm, of silicon nitride, optionally doped with Al, Zr and/or B, or of aluminum nitride AlN;
- a first functional layer made of said alloy;
- an intermediate layer, of thickness comprised between 5 and 150 nm, comprising at least one layer of a material chosen from silicon nitride, optionally doped with Al, Zr and/or B, aluminum nitride AlN, tin oxide, a mixed tin zinc oxide $Sn_yZn_zO_x$, silicon oxide $SiO_2$, titanium oxide $TiO_2$, silicon oxynitrides $SiO_xN_y$, and preferably optionally doped silicon nitride;
- a second functional layer made of said alloy; and
- an upper layer, of thickness comprised between 5 and 150 nm and preferably between 30 and 70 nm, of silicon nitride, optionally doped with Al, Zr and/or B, or of aluminum nitride AlN.

13. The anti-solar glazing unit as claimed in one of the preceding claims, in which the multilayer furthermore comprises at least one additional protective layer for protecting the one or more alloy layers, said additional layer being made of a material chosen from the group made up of Ti, Mo, Al, Nb, Sn, Zn and their alloys and NiCr, TiN and NbN, said one or more additional protective layers being placed in contact and above and/or below the one or more functional layers, respectively, and having a geometric thickness comprised between about 1 nm and about 5 nm.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0121540 A

- US 4943484 A